# EUROPEAN PATENT APPLICATION

(11) **EP 3 514 213 A1**
(43) Date of publication of application: **24.07.2019**
(21) Application number: 19151397.7
(22) Date of filing: 11.01.2019
(51) Int. Cl.: C09J 133/02, C09J 133/14, C09J 143/02

(54) **PRESSURE-SENSITIVE ADHESIVE SOLUTION COMPRISING POLYMERS WITH CATIONIC AND ANIONIC GROUPS**

(30) Priority: 18.01.2018 EP 18152252
(71) Applicant: BASF SE, 67056 Ludwigshafen am Rhein (DE)
(72) Inventor: GERST, Matthias, 67056 Ludwigshafen (DE); TAVERA, Justine, 67056 Ludwigshafen (DE); MOEBIUS, Stephan, 67056 Ludwigshafen (DE); SCHWARZ, Andreas, 67056 Ludwigshafen (DE)
(74) Representative: BASF IP Association

(57) **Abstract**

A description is given of a pressure-sensitive adhesive solution comprising one or polymers dissolved in an organic solvent of high relative permittivity. The polymers are capable of ionically crosslinking after removable of the organic solvent and are made from monomer mixtures comprising low Tg C4 to C20 alkyl (meth)acrylates, cationic monomers having at least one cationic group selected from amino groups and quaternary ammonium groups, and anionic monomers having at least one protonated or deprotonated acid group. The pressure-sensitive adhesive solutions can be used for producing pressure-sensitive hotmelts and self-adhesive articles such as adhesive tapes, adhesive labels or protective films.

## Description

The project leading to this patent application received funding from the European's Union Horizon 2020 research and innovation program under the Marie Sklowodowska-Curie grant agreement No. 642861.

The invention relates to a pressure-sensitive adhesive solution comprising one or polymers dissolved in an organic solvent of high relative permittivity. The polymers are capable of ionically crosslinking after removable of the organic solvent and are made from monomer mixtures comprising low Tg C4 to C20 alkyl (meth)acrylates, cationic monomers and anionic monomers. The pressure-sensitive adhesive solutions and in addition the corresponding hotmelts produced from the solutions by removing the solvent, can be used for producing self-adhesive articles such as adhesive tapes, adhesive labels or protective films.

Pressure-sensitive adhesives (PSA) represent a large part of the chemical adhesive industry. They can be adapted to a wide range of applications from automotive to packaging and medicine. They need to exhibit both viscoelastic and elastic behaviors at the same time. The viscoelastic properties are necessary to cover the substrate and maximize the area of contact but also to obtain a tacky behavior (adhesion). Both are provided by a glass transition temperature (Tg) lower than the application temperature (typically around -20 to -40°C) plus a well-controlled molecular weight. The low Tg of the polymer is usually due to a corresponding mixture of monomers such as acrylates (for example n-butyl acrylate, methyl methacrylate, ethylhexyl acrylate etc.), styrene, butadiene, acrylamide, acrylonitrile, vinylacetate etc. The elastic part of the adhesive is important to resist to shear, in other words to insure the cohesion and heat resistance. This last effect is often achieved by chemical crosslinking between the polymer chains and by a high molecular weight for high amount of entanglement of the polymer chains of the adhesive polymers. Crosslinks can be introduced directly during the polymerization or can be triggered after coating of the adhesive layer by external factors such as UV radiations. Although nowadays interest arises, especially in the medical field, for physically crosslinked adhesives or hydrogels or for combinations of physically and covalently crosslinked adhesives or hydrogels which provide interesting responses to stresses and environmental triggers. Polymers for PSA can usually be found as aqueous emulsion polymers, solution polymers in organic solvents or as solvent free hotmelts. They are coated on a backing such as polymer foil or paper to make the final product. With PSA there is an ongoing desire for performance to find a delicate balance between adhesion or viscoelastic behavior and cohesion or elastic behavior to simultaneously maximize both properties. Adhesion and cohesion are divergent performance properties. Measures taken to improve adhesion generally lead at the same time to a deterioration in cohesion, and vice versa. High early bond adhesion often has the drawback that an adhesive article is difficult to reposition immediately after adhering the article to a substrate.

WO 2013/130238 A1 (US 9238702 B1) describes an ionically crosslinkable composition comprising a methacrylate copolymer with pendant acid-functional groups and pendant photobase generator groups. The photobase groups provide amine groups upon UV irradiation. The polymers do not have free amine groups in the adhesive solution. It is described that mixing acid-functional (meth)acrylate copolymer and amines results in instant gelation.

WO 2016/011028 A1 (US2017/0157285 A1) discloses a method to make an underwater polymer from oppositely charged polyelectrolytes via complex coacervation. The adhesive can gel upon change in ionic strength in situ and be biocompatible.

Documents EP 0390012 A1, US2016/0046810 A1 and US2017/0002172 A1 describe ionically crosslinked polymers wherein crosslinking is achieved by interactions between anionic groups on polymer chains and chelating metal ions.

An object of the present invention was to further improve the adhesive properties of solution PSAs and of hotmelt PSAs, to provide a simple method for blending oppositely charged polymers or for simultaneous copolymerization in solution of hydrophobic monomers and oppositely charged ionomers without covalent crosslinkers and without the need of UV irradiation to give pressure-sensitive adhesives with a good balance between tack, peel and shear properties, although combinations with additionally partially covalent crosslinking, e.g. by UV irradiation may be possible. Accordingly, the PSA solutions described in more detail below have been found.

The invention provides a pressure-sensitive adhesive solution comprising one or polymers dissolved in an organic solvent,
wherein the organic solvent has a relative permittivity of more than 10 at 20 °C,
wherein the polymers have a glass transition temperature of 0 °C or lower, measured as midpoint temperature by differential scanning calorimetry with a heating rate of 20°C/min, the polymers are capable of ionically crosslinking after removable of the organic solvent,
wherein the pressure-sensitive adhesive solution comprises at least one polymer P1 formed by radical polymerization (preferably in solution) from a monomer mixture comprising
(a) at least 60% by weight of at least one C4 to C20 alkyl (meth)acrylate which, when polymerized as a homopolymer, has a glass transition temperature of -30°C or less,
(b) at least one cationic monomer having at least one cationic group selected from amino groups and quaternary ammonium groups, and
(c) optionally at least one further monomer different from monomers (a), (b) and (d),
   and wherein alternatively the monomer mixture for polymer P1 either comprises
(d) at least one copolymerizable anionic monomer having at least one protonated or deprotonated acid group,
or wherein the pressure-sensitive adhesive solution additionally comprises at least one polymer P2 formed by radical solution polymerization from a monomer mixture comprising
(a) at least 60% by weight of at least one C4 to C20 alkyl (meth)acrylate which, when polymerized as a homopolymer, has a glass transition temperature of -30°C or less,
(d) at least one anionic monomer having at least one protonated or deprotonated acid group, and
(c) optionally at least one further monomer different from monomers (a) and (d),
and wherein if neither the monomer mixture for forming polymer P1 nor the monomer mixture for forming polymer P2 comprises an anionic monomer comprising protonated or deprotonated groups of strong acids with a pKa value of 3 or below, then cationic monomer (b) is at least one monomer having at least one quaternary ammonium group,
and wherein if the monomer mixture for forming polymer P1 does not comprise a cationic monomer having a quaternary ammonium group, then anionic monomer (d) is at least one monomer comprising strong acid groups with a pKa value of 3 or below, the monomer amounts being based in each case on the sum of all monomers of the respective polymer.

The invention also provides a pressure-sensitive hotmelt adhesive, prepared from the pressure-sensitive adhesive solution by removing the organic solvent prior to application of the adhesive to a substrate.

The invention also provides a method of producing an adhesive article comprising coating an article at least partly with at least one pressure-sensitive adhesive solution or with at least one pressure-sensitive hotmelt adhesive according to the invention.

In the text below, the term "(meth)acrylate" and similar terms are used as an abbreviated notation for "acrylate or methacrylate". The term "Cx alkyl (meth)acrylate" and similar terms are used as an abbreviated notation for a (meth)acrylic acid alkyl ester with x carbon atoms in the alkyl group.

A pressure-sensitive adhesive (PSA) is a viscoelastic adhesive whose set film at room temperature (20°C) in the dry state remains permanently tacky and adhesive. Bonding to substrates is accomplished instantaneously by gentle applied pressure. A PSA solution is a composition which comprises a pressure-sensitive adhesive polymer in solution in an organic solvent. The solvent preferably contains no or less than 20%, less than 10% or less than 5% by weight of water, based on the total composition.

The term "cationic group" denotes a functional group which is either permanently cationic, such as a quaternary ammonium group, or which is a functional group that becomes cationic by protonation with an acid such as primary, secondary or tertiary amine groups. A cationic monomer is a monomer having at least one cationic functional group. A "strong" cationic group as used herein denotes a permanent cationic group such as for example a quaternary ammonium group. A "weak" cationic group as used herein denotes a non-permanent cationic group such as for example a protonated or non-protonated amine group.

The term "anionic group" denotes a functional group which is either anionic, such as a deprotonated acid group, or which is a functional group that becomes anionic by deprotonation with a base, such as acid groups. An anionic monomer is a monomer having at least one anionic functional group.

The term "strong acid" as used herein denotes an acid with a pKa value of 3 or less. The term "weak acid" as used herein denotes an acid with a pKa value of more than 3. pKa values refer to 25 °C unless otherwise noted. The term "strong anionic group" as used herein denotes a protonated or deprotonated strong acid group.

The relative permittivity as used herein refers to a temperature of 20 °C, unless otherwise noted. Room temperature is 20 °C, unless otherwise indicated.

"pphm" means parts by weight per 100 parts by weight of monomers.

Glass transition temperature (Tg) is determined by differential scanning calorimetry (ASTM D 3418-08, midpoint temperature, heating rate 20°C/min).

The concept of this invention is to use ionic interactions as crosslinkers for polymers in solution in a way that the solution is then coatable on different substrates to get a final application as PSA. To this effect, oppositely charged ionic monomers are either copolymerized with a classic backbone chain of acrylate monomers or a blend of oppositely charged acrylate polymers is used. Coating of the substrates can be achieved either by directly using the pressure-sensitive adhesive solution or by first removing the organic solvent and applying the pressure-sensitive adhesive at elevated temperatures as a hotmelt.

The solvent used in this invention has an important role. The solvent is a polar organic solvent because it has a relative permittivity of more than 10 at 20 °C. Preferably, polymerization and/or blending of polymers P1 and P2 are conducted in this solvent. Solvents with relative permittivity of more than 10 are for example acetone, 1-butanol, 2-butanol, 2-butanone, tert.-butyl alcohol, diethylene glycol, dimethyl sulfoxide (DMSO), ethanol, methanol, ethylene glycol, glycerine, dimethylformamide (DMF) and N-methyl-2-pyrrolidone (NMP). Preferred solvents are 2-propanol which has a relative permittivity of ε= 18.6 at 20°C, and DMSO, DMF, NMP and methanol. The high polarity of the solvent allows to polymerize anionic monomers and cationic polymers separately or simultaneously with no or very little amounts of gel being formed during polymerization and no precipitate is formed during blending because the ionic interactions are believed to be 'screened' by the solvent. Without formation of gel or precipitate, it is possible to easily coat the PSA solutions at room temperature on polymer films or other substrates. With the evaporation of the solvent, the ionic interactions between the polymer chains are able to form intermolecularly or intramolecularly. This results in a physically crosslinked polymer network with beneficial balanced adhesion-cohesion properties and good ability to reposition during early bonding. When applied as a hotmelt, the pressure-sensitive adhesive is still thermoplastic. A synthesis of the same polymers for example in ethyl acetate with a relative permittivity of ε= 6.02 at 20°C results in unfavorable gelation which makes the solution unsuitable for coated applications of PSAs.

The following table lists common solvents and their relative permittivity.

| Solvent | Relative permittivity at 20 °C |
|---|---|
| acetic acid | 6.20 |
| acetone | 21.01 |
| 1-butanol | 17.8 |
| 2-butanol | 17.26 |
| 2-butanone | 18.6 |
| *t*-butyl alcohol | 12.5 |
| diethylene glycol | 31.8 |
| dimethyl sulfoxide (DMSO) | 47 |
| 1,4-dioxane | 2.21 (25°C) |
| ethanol | 24.6 |
| ethyl acetate | 6 (25°C) |
| ethylene glycol | 37.7 |
| glycerin | 42.5 |
| heptane | 1.92 |
| hexane | 1.89 |
| methanol | 32.6 (25°C) |
| 1-propanol | 20.1(25°C) |
| 2-propanol | 18.6 |
| pyridine | 12.3(25°C) |
| tetrahydrofuran (THF) | 7.52 |
| toluene | 2.38(25°C) |
| triethyl amine | 2.4 |
| water | 78.54 |

Polymer P1 and polymer P2 (if present) are prepared from a first monomer type (a). Monomer type (a) is present to an extent of at least 60% by weight, e.g., from 60% to 95% by weight, preferably from 70 to 90% by weight, based on the total amount of the monomers used for preparing polymer P1 or polymer P2. The monomers (a) are selected from those of the C4 to C20 alkyl (meth)acrylates which, when polymerized as homopolymers, have a glass transition temperature of -30°C or less or -40°C or less, preferably of -45°C or less. Preferred monomers (a) are C₄ to C₁₀ alkyl acrylates and C₄ to C₁₀ alkyl methacrylates, more particularly C₄ to C₈ alkyl acrylates and C₄ to C₈ alkyl methacrylates. Especially preferred are n-butyl acrylate, n-hexyl acrylate, octyl acrylate, and 2-ethylhexyl acrylate, and also mixtures of these monomers. The polymer P1 is prepared from a cationic monomer (b) having at least one cationic group selected from amine groups and quaternary ammonium groups. Monomer type (b) is present preferably to an extent of at least 0,1 % by weight, e.g. from 0,1 to 10% by weight, more preferably from 0,7 to 4,2% by weight or from 1,8 to 3,6% by weight based on the total amount of the monomers used for preparing the polymer P1. The amine groups can be primary, secondary, or tertiary amine groups which can be protonated either by non-polymeric acid compounds comprised within the solution or by acid groups of polymer P1 and/or polymer P2, thus being convertible to cationic groups. The amine groups or ammonium groups of polymer P1 can be present in the form of substituents or as a portion of the polymer backbone chain. They can also be a portion of an aromatic or non-aromatic ring system.

Preferred cationic monomers (b) are selected from the group consisting of primary, secondary or tertiary amino acrylates and quaternary ammonium acrylates. Preferred examples of suitable cationic monomers are dialkylaminoalkyl acrylate, dialkylaminoalkyl methacrylate, aminoalkyl acrylate, aminoalkyl methacrylate, dialkylaminoalkyl acrylamide, dialkylaminoalkyl methacrylamides, diallyl dialkylammonium halide. The alkyl groups preferably have 1 to 10 C-atoms, more preferably 1 to 4 C-atoms.

Monomers with amine functional groups can be used in the polymerization reaction in the form of the free bases, but are preferably used in the form of the salts with mineral acids, such as hydrochloric acid, sulfuric acid, or phosphoric acid.

Monomers with quaternary ammonium groups are monomers with amine groups as mentioned above wherein the amine groups have been quaternized before or after polymerization with quaternizing agents. Examples of quaternizing agents that can be used are dimethyl sulfate, diethyl sulfate, methyl chloride, ethyl chloride, cetyl chloride, or benzyl chloride. Examples are trialkylammoniumalkyl (meth)acrylate with preferably 1 to 10 C-atoms, more preferably 1 to 4 C-atoms in the alkyl group.

Preferred cationic monomers are dimethylaminoethyl (meth)acrylate, diethylaminoethyl (meth)-acrylate, dimethylaminopropyl (meth)acrylate, 2-aminoethyl (meth)acrylate, dimethylaminoethyl (meth)acrylamide, dimethylaminopropyl(meth)acrylamide, diallyldimethylammonium chloride, trimethylammoniumethyl methacrylate, trimethylammoniumethyl acrylate.

Most preferred cationic monomers are strong cationic monomers having at least one quaternary ammonium group such as trialkylammoniumalkyl (meth)acrylate with preferably 1 to 10 C-atoms, more preferably 1 to 4 C-atoms in the alkyl group, in particular trimethylammoniumethyl methacrylate and trimethylammoniumethyl acrylate.

At least one of polymers P1 and P2 is formed from a monomer mixture including at least one anionic monomer (d) having at least one protonated or deprotonated acid group. Monomer type (d) is present preferably to an extent of at least 0,1%, preferably at least 1% by weight, and preferably up to 10% or up to 5% by weight, e.g. from 1 to 4,6% by weight, more preferably from 2 to 4% by weight, based on the total amount of the monomers used for preparing the respective polymer P1 or P2.

Suitable anionic monomers (d) are acid monomers which are ethylenically unsaturated, radically polymerizable monomers which contain at least one acid group. Acid monomers are, for example, ethylenically unsaturated carboxylic acids, ethylenically unsaturated sulfonic acids, ethylenically unsaturated phosphonic acids and ethylenically unsaturated phosphoric acids. Ethylenically unsaturated carboxylic acids are preferably alpha,beta-monoethylenically unsaturated monocarboxylic or dicarboxylic acids having 3 to 6 C atoms in the molecule. Examples of such are acrylic acid, methacrylic acid, itaconic acid, maleic acid, fumaric acid, crotonic acid, vinylacetic acid, and vinyllactic acid.

Examples of suitable ethylenically unsaturated sulfonic acids include vinylsulfonic acid, allyl sulfonic acid, methyl allyl sulfonic acid, styrenesulfonic acid, 2-acrylamido-2-methylpropane sulfonic acid, sulfoalkyl (meth)acrylates with 1 to 4 C atoms in the alkyl group such as sulfopropyl acrylate or sulfopropyl methacrylate.

Examples of suitable ethylenically unsaturated phosphonic acids include vinylphosphonic acid.

Examples of suitable ethylenically unsaturated phosphoric acids include monoesters of phosphoric acid with hydroxy compounds containing at least one ethylenically unsaturated group such as an acryl group, a methacryl group or an allyl ether group. Suitable are phosphoric acid hydroxyalkyl (meth)acrylate esters such as for example phosphoric acid 2- hydroxyethyl methacrylate ester, or phosphate ester monomers available as Sipomer® PAM monomers, for example phosphate esters of polyethylene glycol monomethacrylate, Sipomer® PAM 100 (phosphate monoester with a methacrylate group), Sipomer® PAM 200 (phosphate monoester with a methacrylate group), Sipomer® PAM 300 (phosphate monoester with an acrylate group), Sipomer® PAM 300, Sipomer® PAM 4000 (phosphate monoester with a methacrylate group), Sipomer® PAM 5000 (phosphate monoester with an allyl ether group).

The anionic monomers (d) can be divided into strong acids and weak acids. Strong acids as defined herein have a pKa value of 3 or below. Preferably at least one of polymers P1 and P2 is made from a monomer mixture comprising at least one strong acid monomer. Preferred strong acid monomers are selected from the above mentioned ethylenically unsaturated sulfonic acids, ethylenically unsaturated phosphonic acids and ethylenically unsaturated phosphoric acids.

The molar ratio of cationic groups of monomers (b) to anionic groups of monomers (d) can be equimolar or not. The molar ratio is preferably from 0,1 to 10 or from 0,5 to 2, most preferred from 0,75 to 1,5.

The monomer mixture for forming polymers P1 or P2 may optionally comprise further monomers (c), which are different from the monomers (a), (b) and (d). The monomers (c) are used preferably in amounts of 1 % to 40% by weight, more particularly of 1,5% to 30% or from 5 to 25% by weight, based on the total amount of monomers of the respective polymer P1 or P2.

The monomers (c) may be selected from the group consisting of C1 to C20 alkyl (meth)-acrylates different from monomers (a) (i.e. when polymerized as a homopolymer have a glass transition temperature of more than -30°C, in particular of more than -20°C, more than 0°C or more than 20°C), C1 to C20 hydroxyalkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, or mixtures of these monomers. Examples include (meth)acrylic acid alkyl esters with a C1-C10 alkyl radical, such as methyl methacrylate, methyl acrylate, ethyl acrylate, ethyl methacrylate. Vinyl esters of carboxylic acids having 1 to 20 C atoms are, for example, vinyl laurate, vinyl stearate, vinyl propionate, Versatic acid vinyl esters, and vinyl acetate. Suitable vinylaromatic compounds include vinyltoluene, alpha- and para-methylstyrene, alpha-butylstyrene, 4-n-butylstyrene, 4-n-decylstyrene, and, preferably, styrene. Examples of nitriles are acrylonitrile and methacrylonitrile. The vinyl halides are ethylenically unsaturated compounds substituted by chlorine, fluorine or bromine, preferably vinyl chloride and vinylidene chloride. Vinyl ethers include, for example, vinyl methyl ether and vinyl isobutyl ether. Vinyl ethers of alcohols comprising 1 to 4 C atoms are preferred. Hydrocarbons having 2 to 8 C atoms and one or two olefinic double bonds include ethylene, propylene, isoprene, and chloroprene. Particularly preferred as further monomers are methyl acrylate, methyl methacrylate, ethyl acrylate, styrene, C1-C10 hydroxyalkyl (meth)acrylates, and (meth)acrylamide, and also mixtures of these monomers.

One type of monomers (c) are copolymerizable photoinitiator monomers which enable for UV curing of the resulting polymer. The amount of the photoinitiator monomer is preferably 0,05 to 10 or 0,05 to 5 parts by weight, more preferably 0,1 to 2 or 0,1 to 1 parts by weight, per 100 parts of monomers. Polymerizable photoinitiators preferably have the following schematic construction:

A-X-B

where A is a monovalent organic radical which preferably has a phenone group as radiation-sensitive group,
X is an ester group selected from -O-C(=O)-, -(C=O)-O, and -O-(C=O)-O-, and
B is a monovalent organic radical which comprises an ethylenically unsaturated, radically polymerizable group. Preferred radicals A are radicals which comprise at least one structural element derived from phenones, more particularly from acetophenones or benzophenones. Preferred radicals B comprise at least one, preferably precisely one, acrylic or methacrylic group.

The ethylenically unsaturated group may be bonded directly to the group X. Also, the radiation-sensitive group may be bonded directly to the group X. An alternative possibility is for there to be a spacer group present in each case between ethylenically unsaturated group and the group X and/or between radiation-sensitive group and group X. The spacer group may have a molecular weight, for example, of up to 500, more particularly up to 300 or 200 g/mol.

Suitable photoinitiators are, for example, compounds having acetophenone or benzophenone structural units, described in EP 377191 A or EP 1213306 A, for example. One preferred group X is the carbonate group -O-(C=O)-O-. Preferred polymerizable photoinitiators are compounds of the formula F-1: 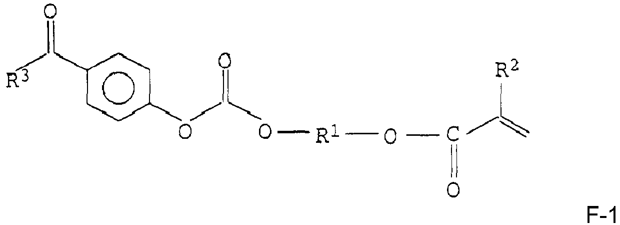 in which R1 is an organic radical having up to 30 C atoms, R2 is an H atom or a methyl group, and R3 is a substituted or unsubstituted phenyl group or is a C1-C4 alkyl group. R1 more preferably is an alkylene group, more particularly a C2-C8 alkylene group. R3 more preferably is a methyl group or is a phenyl group, very preferably a phenyl group.

Examples of other acetophenone and benzophenone derivatives that are suitable as copolymerizable photoinitiators are those of the formula F-2 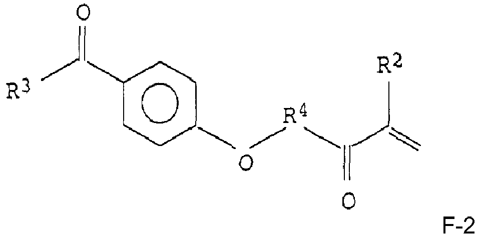 in which R2 and R3 may have the above definition and R4 may be a single bond or (-CH2-CH2-O)n, where n is an integer from 1 to 12.

A preferred monomer mixture for polymer P1 comprises
monomers (a) in an amount of from 60 to 95% by weight,
the cationic monomers (b) in an amount of from 0,7 to 10%, preferably from 0,7 to 4,2% by weight,
the further monomers (c) in an amount of 1,5 to 30% by weight, and
the anionic monomers (d) in an amount of 1 to 10%, preferably 1 to 5% by weight.

A preferred monomer mixture for polymer P2 comprises
monomers (a) in an amount of from 60 to 95% by weight,
the further monomers (c) in an amount of 1,5 to 30% by weight, and
the anionic monomers (d) in an amount of 1 to 10%, preferably 1 to 5% by weight.

In one embodiment of the invention the polymer P1 is made from a monomer mixture comprising at least one cationic monomer (b) as well as at least one anionic monomer (d), preferably at least one cationic monomer (b) selected from monomers having at least one quaternary ammonium group, and
at least one anionic monomer (d) selected from monomers comprising strong acid groups with a pKa value of 3 or below.

A preferred monomer mixture for a polymer P1 with strong cationic groups as well as strong anionic groups comprises
monomers (a) in an amount of from 70 to 80% by weight, selected from n-butyl acrylate and 2-ethylhexylacrylate,
cationic monomers (b) in an amount of from 0,7 to 4,2% by weight, selected from trialkylammoniumalkyl (meth)acrylates with preferably 1 to 10 C-atoms in each of the alkyl groups,
further monomers (c), different from monomers (a), (b) and (d), in an amount of 1,5 to 30% by weight,
anionic monomers (d) with a pKa value of 3 or below in an amount of 1 to 5% by weight, selected from monoesters of phosphoric acid and hydroxy compounds containing at least one ethylenically unsaturated group such as an acryl group, a methacryl group or an ally ether group.

In a preferred embodiment the polymers P1 and P2 are not covalently crosslinked. Preferably, the pressure-sensitive adhesive solution does not comprise an additive for covalently crosslinking polymers P1 and P2.

The weight average molecular weights M_{w} of each of polymers P1 and P2 is preferably at least 50000, more preferably from 90000 to 400000. The weight average molecular weight is measured by gel permeation chromatography calibrated with closely distributed polymethylmethacrylate (PMMA) standard with a range of molecular weight from M=800 to M=2.200.000 g/mol.

The glass transition temperature of polymers P1 and P2 is 0 °C or lower, preferably -60 to 0°C, more preferably -60 to -10°C, and very preferably -60 to -20°C.

The polymers P1 and P2 may be prepared by solution polymerization in an organic solvent with the above-identified ethylenically unsaturated, radically polymerizable monomers being polymerized by radically initiated solution polymerization, using the customary amounts of polymerization initiators, being generally 0.01 to 10, more particularly 0.1 to 4 wt%, based on the total weight of the monomers. The polymers may be prepared at temperatures of 20 to 150°C, preferably at temperatures in the range from 60 to 120°C and at pressures from 0.1 to 100 bar (absolute), preferably at 0.3 to 10 bar, in the presence of 0.01 to 10 pphm, based on the amount of monomers, of polymerization initiators such as for example peroxides or azo initiators, and in the presence of 0 to 250 wt.% of solvents, preferably 25 to 235 wt.% or 25 to 150 wt.%, based on the total amounts of monomers, i.e., by solution polymerization or bulk polymerization. Reaction may take place by lowering the pressure, e.g. from atmospheric pressure (1 bar) to 500 mbar (absolute).

Examples of polymerization initiators include azo compounds, ketone peroxides, and alkyl peroxides, examples being acyl peroxides such as benzoyl peroxide, dilauroyl peroxide, didecanoyl peroxide, and isononanoyl peroxide, alkyl esters such as tert-butyl perpivalate, tert-butyl per-2-ethylhexanoate, tert-butyl permaleate, tert-butyl perisononanoate, tert-butyl perbenzoate, tert-amyl per-2-ethylhexanoate, dialkyl peroxides such as dicumyl peroxide, tert-butyl cumyl peroxide, di-tert-butyl peroxide, and peroxodicarbonates. As initiators it is possible, furthermore, to use azo initiators such as, for example, 2,2'-azobisisobutyronitrile, 2,2'-azobis-(methyl isobutyrate), or 2,2'-azobis(2,4-dimethylvaleronitrile).

For the polymerization procedure, it is also possible to admix the reaction mixture with compounds that lower the degree of polymerization, known as chain transfer agents, in amounts, for example, of from 0.1 to 5 part by weight, based on 100 parts by weight of the monomers to be polymerized. Suitable examples include compounds having a thiol group, as for example mercaptans such as mercaptoethanol, tert-butyl mercaptan, mercaptosuccinic acid, ethylhexyl thioglycolate, 3-mercaptopropyltrimethoxysilane, or dodecyl mercaptan. The chain transfer agents are preferably low-molecular weight compounds having a molar weight of less than 2000, more particularly less than 1000 g/mol.

The pressure-sensitive adhesive solution according to the invention comprises polymers P1 and P2 in a total amount of preferably from 30 to 70% by weight or from 40 to 55% by weight.

The pressure-sensitive adhesive solution may comprise additives. The additives are selected, for example, from fillers, dyes, flow control assistants, thickeners, preferably associative thickeners, defoamers, plasticizers, pigments, wetting agents, UV protectants, and tackifiers. For improved surface wetting, the PSAs may in particular comprise wetting assistants, examples being fatty alcohol ethoxylates, alkylphenol ethoxylates, sulfosuccinic esters, nonylphenol ethoxylates, polyoxyethylenes/-propylenes or sodium dodecylsulfonates. The amount of an additive is preferably 0.05 to 50 parts by weight, or 0.1 to 5 parts by weight, more particularly 0.1 to 3 parts by weight, per 100 parts by weight of polymers (solid).

Tackifiers are known per se to the skilled person. They are additives for adhesives or elastomers that improve the autoadhesion (tack, intrinsic stickiness, self-adhesion) of these systems. They generally have a relatively low molar mass (Mn about 200-2000 g/mol), a glass transition temperature which lies above that of the elastomers, and sufficient compatibility with the latter; in other words, the tackifiers dissolve at least partly in polymer films formed from the elastomers. The amount by weight of the tackifiers is preferably 5 to 100 parts by weight, more preferably 10 to 50 parts by weight, per 100 parts by weight of polymer (solid/solid). Suitable tackifiers are, for example, those based on natural resins, such as rosins, for example. Tackifiers based on natural resins include the natural resins themselves and also their derivatives formed, for example, by disproportionation or isomerization, polymerization, dimerization or hydrogenation. They may be present in their salt form (with, for example, monovalent or polyvalent counterions (cations)), or, preferably, in their esterified form. Alcohols used for the esterification may be monohydric or polyhydric. Examples are methanol, ethanediol, diethylene glycol, triethylene glycol, 1,2,3-propanetriol, and pentaerythritol. Also finding use as tackifiers, furthermore, are phenolic resins, hydrocarbon resins, e.g., coumarone-indene resins, polyterpene resins, terpene oligomers, hydrocarbon resins based on unsaturated CH compounds, such as butadiene, pentene, methylbutene, isoprene, piperylene, divinylmethane, pentadiene, cyclopentene, cyclopentadiene, cyclohexadiene, styrene, a-methylstyrene, vinyltoluene. Also being used increasingly as tackifiers are polyacrylates which have a low molar weight. These polyacrylates preferably have a weight-average molecular weight M_{w} of below 30 000. The polyacrylates are composed preferably to an extent of at least 60%, more particularly at least 80%, by weight of C₁-C₈ alkyl (meth)acrylates. Preferred tackifiers are natural or chemically modified rosins. Rosins are composed predominantly of abietic acid or derivatives thereof.

PSA solutionsof the invention (or hotmelts made thereof) can be used for producing adhesive articles, including articles which have been rendered self-adhesive. The adhesive article is coated at least partly with at least one pressure-sensitive adhesive solution according to the invention. The adhesive articles may be adhesive tapes, adhesive labels or protective films, in particular repositionable labels. A preferred label is a self-adhesive paper label or self-adhesive film label, the adhesive being applied to paper or to a polymer film as carrier material. The adhesive article may also be an adhesive tape, where the adhesive is applied to a tape-like carrier material or to a carrier material that can be cut into tapes after coating with the adhesive. The carrier material of the adhesive tape may comprise woven or nonwoven fabrics, films, paper, felts, foams, and coextrudates, or combinations of these. Fields of application are carrierless, single-sided and double-sided adhesive tapes, medical adhesive tapes, adhesive packaging tapes, cable wrapping tapes, carpet laying tapes, adhesive assembly tapes, adhesive tapes for fixing roofing felt sheets, carrier materials which have been rendered self-adhesive, such as foams, for example, bitumen sheets, and the like. The invention accordingly also provides for the use of PSA solutions of the invention for producing self-adhesive articles. For the production of the adhesive articles, a layer of adhesive can be applied to the carrier material in a customary way, as for example by rolling, knife coating, spreading, etc. The solvent can be removed by drying at 20 to 150°C, for example. The coated substrates thus obtained are used, for example, as self-adhesive articles, such as labels, adhesive tapes or sheets. For this purpose, before or after the adhesive is applied, the carriers can be cut to form adhesive tapes, labels or sheets. For subsequent use, the PSA-coated side of the substrates may be lined with a release paper, such as with a siliconized paper, for example.

The invention also provides an adhesive tape which has at least one carrier layer and is coated on one or both sides with at least one PSA solution or hotmelt of the invention. Preferred carrier materials for producing adhesive tapes are polyethylene (PE), oriented polypropylene (oPP), polyethylene terephthalate (PET), PE foam, and polyurethane foam (PU foam).

For the production of adhesive articles, the application weight of the PSA solution, based on solids content, is preferably at least 20 g/m² and can be up to 200 g/m² or higher, preferably from 20 to 60 g/m².

One embodiment of the invention is an adhesive tape where the material of the carrier layer is selected from PE, oPP, PET, PE foam, and PU foam and/or the adhesive tape has at least one detachable protective layer lining the layer of adhesive.

The present invention provides a simple way of blending oppositely charged polymers or of simultaneous copolymerization in solution of hydrophobic monomers and oppositely charged ionomers without covalent crosslinkers, giving good balance between peel and shear properties

### Examples

### Materials used:

- nBA: n-butyl acrylate
- MMA: methyl methacrylate
- MAA: methacrylic acid
- EHA: 2-ethylhexyl acrylate
- MAETAC: (2-(methacryloyloxy)ethyl) trimethylammonium chloride solution in water (80%)

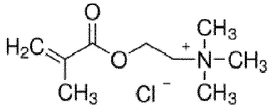

- DMAEMA: Dimethylaminoethyl methacrylate

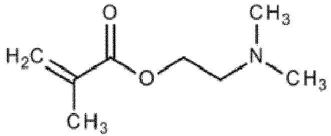

- DMAPMAE: Dimethlaminopropyl methacrylamide
- Polystep® HPE: Phosphoric acid 2- hydroxyethyl methacrylate ester
tert-Butyl peroxypivalate (75%)
2-propanol

The polymerizations were carried out in a semi-automated glass reactor of 2 liters under nitrogen atmosphere. The syntheses were prepared by free radical solution polymerization. A typical recipe is found in the following table. The initial charge was directly loaded in the reactor and heated up to 70°C, 5% of the monomer feed was then added to the reactor for 2 minutes, followed by 5% of the initiator feed. After 3 minutes, the monomers and initiator feeds were added continuously over 3 hours. Afterwards, the residual monomers were removed thanks to chemical deodorization by a last initiator feed added for 30 minutes at 90°C. The viscosity of the solution was carefully followed throughout the polymerization. Once the solution was cooled down, it was taken out of the reactor and the solid content was measured.

**Table 1: genral procedure**

| Feed | Ingredient | pphm |
|---|---|---|
| Initial charge | 2-propanol | 20-40 |
| Monomer 1 | 2-propanol | 20 |
| | n-Butylacrylate | x |
| | Methyl methacrylate | x |
| | Anionic monomer | x |
| | Cationic monomer | x |
| Initiator 1 | 2-propanol | 23.75 |
| | Tert-Butyl peroxypivalate | 0.3 |
| Initiator 2 | 2-propanol | 12.5 |
| | Tert-Butyl peroxypivalate | 0.2 |

| | | |
|---|---|---|
| pphm: parts by weight per 100 parts by weight of monomer | | |

Different set of samples have been prepared, studying different parameters. A first set of samples studies the effect of the presence of both cationic and anionic monomers in a single copolymer on the adhesive properties. A second set of samples aims for the effect of blending a copolymer bearing only anionic groups with another copolymer bearing only cationic groups. A third set of samples provides the effect of replacing strong ionic groups by weaker ones. A fourth set of samples reports the introduction of backbone monomers to lower further the glass-transition temperature (Tg).

The variations of the monomers amounts are listed below:
- n-butyl acrylate: 71<x<76 pphm
- methyl methacrylate: 19<x<21 pphm
- 2-hydroxyethyl methacrylate ester phosphoric acid: 0<x<5 pphm
- (2-(methacryloyloxy)ethyl) trimethylammonium chloride: 0<x<5 pphm
- methacrylic acid: 0<x<2 pphm
- dimethylaminoethyl methacrylate: 0<x<3 pphm
- 2-ethylhexylacrylate: 0<x<10 pphm

The compositions of the different samples are detailed in the following paragraphs.

### Examples 1-8: Presence of ionic crosslinks

**Table 1: Monomer mixture compositions (in pphm) for copolymers comprising strong cationic groups and strong anionic groups:**

| Polymer examples | nBA | MMA | Polystep® HPE? | MAETAC | Tg (°C |
|---|---|---|---|---|---|
| E1 | 75.47 | 20.36 | 0 | 4.17 | -24.6 |
| E2 | 75.16 | 20.28 | 4.56 | 0 | -25 |
| E3 | 77.23 | 20.85 | 1 | 0.92 | -25.9 |
| E4 | 75.72 | 20.44 | 2 | 1.84 | -24.7 |
| E5 | 72.72 | 19.63 | 4 | 3.65 | -23.9 |
| E6 | 71.87 | 19.4 | 4.56 | 4.17 | -20.4 |
| E7 | 73.67 | 19.88 | 4.17 | 2.28 | -23.1 |
| E8 | 73.51 | 19.84 | 4.56 | 2.09 | -22.7 |

### Example 9 - Blend of oppositely charged copolymers

Example E9 is a 50:50 wt% mixture of cationic copolymer E1 and anionic copolymer E2. Monomer compositions of these are shown above in table 1.

### Examples 10 - 12: Replacing strong ionic groups by weak ionic groups

In this set, the molar ratio used between anionic groups and cationic groups is always equimolar.

**Table 2: Monomer mixture compositions (in pphm) for copolymers comprising strong or weak cationic groups and strong or weak anionic groups**

| Polymer examples | nBA | MMA | Polystep ® HPE | MAETAC | MAA | DMAEMA | Tg (°C) |
|---|---|---|---|---|---|---|---|
| E10 | 73.42 | 19.82 | 4 | 0 | 0 | 2.76 | -23.7 |
| E11 | 75.38 | 20.34 | 0 | 0 | 1.52 | 2.76 | -23.1 |
| E12 | 74.67 | 20.15 | 0 | 3.66 | 1.52 | 0 | -21.1 |

### Example 13: Polymer with lower Tg

**Table 3: Monomer composition for copolymer with lower Tg:**

| Polymer examples | nBA | MMA | Polystep HPE | MAETAC | Tg (°C) |
|---|---|---|---|---|---|
| E13 | 71.87 | 9.52 | 4.56 | 4.17 | -35,8 °C |

### Test methods

### Gel permeation chromatography (GPC)

Molecular weights were measured using Size Exclusion Chromatography (SEC) in a mixture of hexafluoro-2-propanol and 0,05% trifluoro acetic acid calcium salt. The samples had a concentration of 1.5 mg/mL, were filtered on Millipore Millex FG (0.2 µm) before being injected with a volume of 50 µL. The calibration was carried out with closely distributed polymethyl methacrylate (PMMA) standards with a range of molecular weights from M = 800 to M = 2.200.000 g/mol. The values outside the elution range were then extrapolated.

Glass transition temperature (Tg) is determined by differential scanning calorimetry (ASTM D 3418-08, midpoint temperature, heating rate 20°C/min).

### Adhesive tests

Prior to the adhesive tests, all samples were coated on a polyethylene terephthalate (PET) foil using a doctor blade, dried 15 min at room temperature and followed by 15 min at 90°C, to give a dry polymer film grammage of 20 g/m². Finally, all films were cut into pressure sensitive adhesive strips with 25 mm width.

### a) Peel tests

For the determination of the peel strength (adhesion), test strips 25 mm wide were adhered to a test surface of steel or polyethylene (PE) and rolled on once with a roller weighing 1 kg. It was then clamped by one end into the upper jaws of a tensile strain testing apparatus. The adhesive strip was peeled from the test surface at a 180° angle and at a speed of 300 mm/min. The adhesive strip was bent round and peeled off parallel to the metal test panel, with the force needed to accomplish this being recorded. The measure of the peel strength is the force in N/25 mm which results as the average value from two measurements. The peel strength was determined either instantly or 24 hours after bonding. After this time, the bond strength has developed fully.

### b) Quick stick (Loop tack)

In the determination of the Quick stick (surface tack, also called loop tack), a determination is made of the force with which an adhesive applied to a carrier material by bonding without pressure onto a substrate opposes removal from the substrate at a defined removal speed. The determination of the Quickstick represents an adapted test method along the lines of FTM 1 (FINAT Test Method 1). Carrier material is PET film, test substrate is steel. The two ends of the adhesive test strip are folded over for a length of approximately 1 cm with the adhesive side inward. A loop is formed from the adhesive strip, with the adhesive side outward, and the two ends are brought together and clamped into the upper jaw of a tensile testing machine. The test substrate mount is clamped into the lower jaw. The Quick stick test cycle is commenced under standard conditions (23°C, 50% relative humidity). The adhesive strip loop is moved downward by the tensile testing machine at a speed of 300 mm/minute, and so the adhesive side of the test strip bonds to the substrate without additional pressure. The tensile testing machine is halted and is immediately moved upward again when the bottom edge of the upper jaw is 40 mm above the substrate. The test result is reported in N/25 mm width. The maximum value on the display (Fmax) is read off as the measure of the surface tack. An average is formed from three individual results.

### c) Shear strength

For the determination of the shear strength, the test strips were adhered with a bonded area of 25 x 25 mm to sheet steel, rolled on once with a roller weighing 2 kg, and then loaded in suspension with a 1.5 kg weight. The shear strength (cohesion) was determined under standard conditions (23°C; 50% relative humidity). The measure of the shear strength is the time, in hours, for the weight to fall off. In each case, the average was calculated from 3 measurements.

The test results for examples 1-8 are summarized in Table 4. This set of samples aims to show the effect of the presence of anionic and cationic groups at the same time in a single copolymer.

**Table 4: Adhesive test results - presence of ionic crosslinks & effect of the amount**

| Example | Mw | Quick-stick steel Fₘₐₓ (N) | Peel steel instantly Fₘₑₐₙ (N) | Peel steel 24h Fₘₑₐₙ (N) | Peel PE instantly Fₘₐₓ (N) | Peel PE instantly Fₘₑₐₙ (N) | Shear strength (min) |
|---|---|---|---|---|---|---|---|
| E1 *⁾ | 94 100 | 1.2 | 2.5 | 15.6 | 1.1 | 0.91 | 135 |
| E2 *⁾ | 140 000 | 6.1 | 15.5 | 18.9 | 2.6 | 2.4 | 30 |
| E3 | 83 900 | 0.8 | 7.2 | 11.2 | 5.45 | 4.17 | 27 |
| E4 | 135 000 | 1.53 | 4.5 | 19.8 | 2.11 | 1.53 | 159 |
| E5 | 124 000 | 1.8 | 1.3 | 19.3 | 0.3 | 0.2 | 584 |
| E6 | 171 000 | 0.65 | 0.2 | 9 | 0.25 | 0.22 | 868 |
| E7 | 109 000 | 0.91 | 1.4 | 18.5 | 0.5 | 0.39 | 314 |
| E8 | 373 000 | 1.46 | 0.6 | 12.6 | 0.58 | 0.5 | 838 |

| | | | | | | | |
|---|---|---|---|---|---|---|---|
| Mw: weight average molecular weight in g/mol *) not inventive | | | | | | | |

The results show that when comparing a copolymer bearing only cationic groups (E1) or only anionic groups (E2) to a copolymer bearing both with same amount (E6) the shear strength is significantly increased due to the intermolecular and intramolecular ionic interactions preventing depletion inside the adhesive layer under shear load. While the cohesion is increased it has been found that instant peel force is decreased, resulting in a good repositionable effect. The peel force after 24h is sufficiently high.

When comparing the samples with different amounts of cationic and anionic groups an optimum of peel mean force and shear strength is noticed for the copolymer E5. Peel mean force of copolymer E5 is the same as the one of copolymer E4, which comprises half the amount of ionic monomers, but the shear strength is considerably increased. Overall, the shear strength seems to increase with the amount of ionic monomers present in the copolymers, yet the peel mean force 24h shows an increase but then drops for copolymer E6.

On the contrary, both resistance to peel instantly on steel and on PE show a sharp decrease with increasing number of ionic groups in the copolymers, maybe due to the lack of time of the polymer to relax. A change in composition can increase the number of ionic crosslinks (which are relaxing points but still 'stiffening' the chains) and thus extend the time of relaxation of the polymer and its ability to wet the substrate in short times so to maximize contact area for optimum adhesion.

The test results for example E9 (blend of cationic polymer and anionic polymer) are summarized in Table 5.

**Table 5: Adhesive test results for polymer blend**

| Example | Mw | Quick-stick steel Fₘₐₓ (N) | Peel steel instantly Fₘₑₐₙ (N) | Peel steel 24h Fₘₑₐₙ (N) | Peel PE instantly Fₘₐₓ (N) | Peel PE instantly Fₘₑₐₙ (N) | Shear strength (min) |
|---|---|---|---|---|---|---|---|
| E9 | 117050 | 1.9 | 3.8 | 17.5 | 1.5 | 1.3 | 255 |

The results show that the shear strength is almost increased by two for the blend E9 and the peel mean force after 24h on steel is comparable to both initial copolymers E1 and E2. Blending complementary charged polymers results in an increased resistance to shear while keeping almost the same mean force to peel after 24h on steel. Resistance to peel instantly on steel and PE and loop tack show comparable values for E9, similar to those of single polyions E1 and E2.

The test results for example E10 to E12 are summarized in Table 6 and show the effect of replacing the strong anionic monomer (phosphoric acid ester Polystep® HPE) or the strong cationic monomer (quaternary ammonium monomer MAETAC) in the copolymers by weaker ionic groups such as weak anionic monomer MAA (carboxylic acid) or weak cationic monomer DMAEMA (tertiary amine).

**Table 6: Adhesive test results for polymers with strong or weak ionic groups**

| Example | Mw | Quick-stick steel Fₘₐₓ (N) | Peel steel instantly Fₘₑₐₙ (N) | Peel steel 24h Fₘₑₐₙ (N) | Peel PE instantly Fₘₐₓ (N) | Peel PE instantly Fₘₑₐₙ (N) | Shear strength (min) |
|---|---|---|---|---|---|---|---|
| E10 (strong/weak) | 334 000 | 2.04 | 4.8 | 16.5 | 2.45 | 1.04 | 127.3 |
| E11 (weak/weak) | 95 900 | 3.82 | 15.4 | 18.2 | 12.63 | 1.15 | 11 |
| E12 (weak/strong) | 95 300 | 1.89 | 1.6 | 14.9 | 1.62 | 0.95 | 124 |

The results show that peel values after 24h are similar but shear strength values are significantly higher for polymers E10 and E12 with at least one strong ionic component. Also polymers E10 and E12 lead to pressure-sensitive adhesive products which are easier to reposition due to their low instant peel values.

The test results for example E13 are summarized in Table 7 and show the effect of glass transition temperature.

**Table 7: Adhesive test results for polymers with different Tg's**

| Example | Mw | Quick-stick steel Fₘₐₓ (N) | Peel steel instantly Fₘₑₐₙ (N) | Peel steel 24h Fₘₑₐₙ (N) | Peel PE instantly Fₘₐₓ (N) | Peel PE instantly Fₘₑₐₙ (N) | Shear strength (min) |
|---|---|---|---|---|---|---|---|
| E13 Tg -35,8 °C | 70100 | 1.6 | 6.1 | 7.7 | 6.7 | 5.7 | 25 |
| E6 Tg -20,4 °C | 171000 | 0.65 | 0.2 | 9 | 0.25 | 0.22 | 868 |

### Example 14 - Polymerization in ethyl acetate

All following examples were realized in the same conditions as the previous ones, except ethyl acetate was used as solvent. Ethyl acetate was preferably used within range of 40-60 wt%. All examples result in gelation during reaction, noticeable by a high raise in viscosity in the reactor. Gels make the coating difficult and thus unfavorable for PSA applications.

**Table 8: Monomer mixture compositions (in pphm) for polymerization in ethyl acetate**

| Polymer examples | nBA | MMA | Polystep® HPE | DMAEMA | DMAPMAE |
|---|---|---|---|---|---|
| E14 | 75.56 | 20.4 | 4.04 | 0 | 0 |
| E15 | 76.2 | 20.5 | 0 | 0 | 3.3 |
| E16 | 74 | 20 | 4 | 2 | 0 |

## Claims

1. A pressure-sensitive adhesive solution comprising one or more polymers dissolved in an organic solvent,
wherein the organic solvent has a relative permittivity of more than 10 at 20 °C,
wherein the polymers have a glass transition temperature of 0 °C or lower, measured as midpoint temperature by differential scanning calorimetry with a heating rate of 20°C/min, the polymers are capable of ionically crosslinking after removable of the organic solvent, wherein the pressure-sensitive adhesive solution comprises at least one polymer P1 formed by radical polymerization, preferably in solution, from a monomer mixture comprising
(a) at least 60% by weight of at least one C4 to C20 alkyl (meth)acrylate which, when polymerized as a homopolymer, has a glass transition temperature of -30°C or less,
(b) at least one cationic monomer having at least one cationic group selected from amino groups and quaternary ammonium groups, and
(c) optionally at least one further monomer different from monomers (a), (b) and (d),
and wherein alternatively the monomer mixture for polymer P1 either comprises
(d) at least one copolymerizable anionic monomer having at least one protonated or deprotonated acid group,
or wherein the pressure-sensitive adhesive solution additionally comprises at least one polymer P2 formed by radical solution polymerization from a monomer mixture comprising
(a) at least 60% by weight of at least one C4 to C20 alkyl (meth)acrylate which, when polymerized as a homopolymer, has a glass transition temperature of -30°C or less,
(d) at least one anionic monomer having at least one protonated or deprotonated acid group, and
(c) optionally at least one further monomer different from monomers (a) and (d),
and wherein if neither the monomer mixture for forming polymer P1 nor the monomer mixture for forming polymer P2 comprises an anionic monomer comprising protonated or deprotonated groups of strong acids with a pKa value of 3 or below, then cationic monomer
(b) is at least one monomer having at least one quaternary ammonium group,
and wherein if the monomer mixture for forming polymer P1 does not comprise a cationic monomer having a quaternary ammonium group, then anionic monomer (d) is at least one monomer comprising strong acid groups with a pKa value of 3 or below,
the monomer amounts being based in each case on the sum of all monomers of the respective polymer.

2. The pressure-sensitive adhesive solution according to claim 1, wherein the solvent is selected from 2-propanol, methanol, dimethyl sulfoxide, dimethylformamide and N-methyl-2-pyrrolidone.

3. The pressure-sensitive adhesive solution according to claim 1, wherein the molar ratio of cationic groups of monomers (b) to anionic groups of monomers (d) is from 0,1 to 10.

4. The pressure-sensitive adhesive solution according to claim 1, wherein the monomers (a) are selected from the group consisting of n-butyl acrylate, n-hexyl acrylate, octyl acrylate, and 2-ethylhexyl acrylate, and mixtures of these monomers.

5. The pressure-sensitive adhesive solution according to any of the preceding claims, wherein the cationic monomer (b) is selected from the group consisting of primary, secondary or tertiary amino acrylates and quaternary ammonium acrylates and are used in amounts of preferably from 0,1 to 10% by weight, based on the sum of all monomers of the respective polymer.

6. The pressure-sensitive adhesive solution according to any of the preceding claims, wherein the anionic monomers (d) are selected from the group consisting of ethylenically unsaturated sulfonic acids, ethylenically unsaturated phosphonic acids, ethylenically unsaturated phosphoric acids and ethylenically unsaturated carboxylic acids and are used in amounts of preferably from 0,1 to 10% by weight, based on the sum of all monomers of the respective polymer.

7. The pressure-sensitive adhesive solution according to any of the preceding claims, wherein the monomer mixture comprises further monomers (c) selected from the group consisting of C1 to C20 alkyl (meth)acrylates different from monomers (a), C1 to C20 hydroxyalkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, or mixtures of these monomers, in amounts of preferably from 1 to 40% by weight, based on the sum of all monomers of the respective polymer.

8. The pressure-sensitive adhesive solution according to any of the preceding claims, wherein the monomer mixture for polymer P1 comprises monomers (a) in an amount of from 60% to 95% by weight, the cationic monomers (b) in an amount of from 0,7 to 10% by weight, the further monomers (c) in an amount of 1,5 to 30% by weight, the anionic monomers (d) in an amount of 1 to 10% by weight; and/or wherein the monomer mixture for polymer P2 comprises monomers (a) in an amount of from 60% to 95% by weight, the further monomers (c) in an amount of 1,5 to 30% by weight, and the anionic monomers (d) in an amount of 1 to 10% by weight.

9. The pressure-sensitive adhesive solution according to any of the preceding claims, wherein the solution comprises polymers P1 and P2 in a total amount of from 30 to 70 % by weight and at least one additive selected from the group consisting of fillers, dyes, flow control assistants, thickeners, defoamers, plasticizers, pigments, wetting agents, UV protectants, and tackifiers in amounts of preferably from 0,05 to 50 parts by weight per 100 parts by weight of polymers (solid).

10. The pressure-sensitive adhesive solution according to any of the preceding claims, wherein the monomer mixture for polymer P1 comprises
at least one cationic monomer (b) selected from monomers having at least one quaternary ammonium group, and
at least one anionic monomer (d) selected from monomers comprising strong acid groups with a pKa value of 3 or below.

11. The pressure-sensitive adhesive solution according to any of the preceding claims, wherein the polymers P1 and P2 are not covalently crosslinked and wherein the pressure-sensitive adhesive solution does not comprise an additive for covalently crosslinking polymers P1 and P2.

12. The pressure-sensitive adhesive solution according to any of the preceding claims, wherein the weight average molecular weight of polymers P1 and P2 is at least 50000.

13. A pressure-sensitive hotmelt adhesive, prepared from a pressure-sensitive adhesive solution according to any of the preceding claims by removing the organic solvent.

14. A method of producing an adhesive article comprising coating an article at least partly with at least one pressure-sensitive adhesive solution or with at least one pressure-sensitive hotmelt adhesive according to any of the preceding claims.

15. An adhesive article which is coated at least partly with at least one pressure-sensitive adhesive solution according to any of claims 1 to 12 or with at least one pressure-sensitive hotmelt adhesive according to claim 13.

16. The adhesive article according to the preceding claim, selected from adhesive tapes, adhesive labels, protective films, in particular repositionable labels.

17. The use of a pressure-sensitive adhesive solution according to any of claims 1 to 12 or of a pressure-sensitive hotmelt adhesive according to claim 13, for producing self-adhesive articles.
